# EUROPEAN PATENT APPLICATION

(11) **EP 2 985 187 A1**
(43) Date of publication of application: **17.02.2016**
(21) Application number: 14181163.8
(22) Date of filing: 15.08.2014
(51) Int. Cl.: B60R 13/02, B60N 3/02

(54) **Interior door trim with grab handle**

(71) Applicant: Ford Otomotiv Sanayi Anonim Sirketi, 34885 Sancaktepe/Istanbul (TR)
(72) Inventor: Aydin, Mustafa, Izmit/Kocaeli (TR); Çetikli, Burcu, Sancaktepe Istanbul (TR); Özbalci, Onur, Kadiköy/Istanbul (TR)
(74) Representative: Illing, Rolf

(57) **Abstract**

An interior component (1) for a door of a vehicle is provided comprising a grab handle (4) for opening and closing the door, wherein the grab handle (4) is an integral part of the interior component (1).

## Description

The invention refers to an interior component for a vehicle door with an integrated grab handle and a method for manufacturing the interior component.

An interior component such as an interior door trim is typically provided for vehicles in order to cover the door frame for aesthetical reasons and for providing controls for devices such as door locks, seats, mirror and windows. Vehicle door constructions typically feature an inner sheet metal component secured to the metal constructions of the door frame. The interior door trim can be attached to either the sheet metal component or the metal constructions of the door frame.

For opening and, particularly, closing a vehicle door, grab handles are provided. Usually the grab handles are fixed to either the inner sheet metal or, more typically, to the interior door trim.

It is the object of the invention to provide a stable construction of an interior component for a vehicle door with a grab handle. It is a further object of the invention to provide a method of manufacturing an interior component for a vehicle door with a grab handle.

The first object is solved by an interior component for a door of a vehicle as claimed in claim 1 and by a vehicle as claimed in claim 9. The second object is solved by the method for manufacturing of an interior component for a vehicle door as claimed in claim 10. Further advantageous embodiments of the invention are evident from the dependent claims, the figures and the example.

In a first aspect the invention refers to an interior component for a door of a vehicle with a surface comprising a grab handle located at a first side of the interior component, wherein the grab handle is formed as an integral part of the interior component.

Up to now, grab handles are usually manufactured separately and then fixed to either the inner sheet metal or, more typically, to the interior door trim. Pulling at the grab handle upon closing a vehicle door represents a strain to the attachment of the grab handle. During the lifetime of a vehicle, the permanent strain leads to weakening of the attachment of the grab handle to the door trim, bearing the risk of breaking and deforming the interior door trim. Grab handles which are going to lose the attachment with the interior door trim can cause squeak and rattle. In the attachment procedure, the interior door trim can be scratched, leading to an increased scrap rate of the interior door trim. Another problem is that additional manufacturing processes are required for separate grab handles resulting in increase of tooling investments and piece costs.

The interior component according to the invention is advantageous because on the basis of its body-integrated structure the grab handle cannot break from the interior component which it is integrated in. Furthermore, no squeaking and rattling of the grab handle is observed. The integrated grab handle increases the level of quality in the vehicle, as it will invoke a feeling of better quality when being touched in comparison to a separated grab handle because no openings with neighboring parts will be felt. The inventive interior component is further advantageous because it saves cost and time upon its manufacture. No assembly process is required as the interior component and the grab handle are manufactured in one single process. No deformation of the interior component in an additional assembling operation can occur as the grab handle does not need to be attached.

The inventive interior component is suited for all kinds of vehicles which typically have at least one vehicle door with an interior component attached to it. The fact that the grab handle is an integral part of the interior component means that the grab handle is integrated in the interior component. With other words, the grab handle is a part of the interior component and not a separate piece which is attached to the interior component.

The integral grab handle can be arranged at the interior component in any suitable orientation. The grab handle can be arranged in a vertical orientation or in a diagonal orientation with any angular difference to the horizontal or vertical orientation. It is however preferred if the grab handle is arranged in a horizontal position, so that an occupant can grab into the handle from above or below.

At the position of the grab handle the first side of the interior component is preferably formed to have a recess in the surface structure. In one embodiment the grab handle is basically bridging the recess, so that the recess is open to both sites. In another embodiment the recess is formed as a hollow, which means that it has only one opening. If the recess is formed as a hollow the opening of the hollow can be at any position, but it is preferred if the opening is facing the occupant, and more preferred that it is located at the upper side.

The grab handle can be arranged at any position of the interior component. However it is preferred if the grab handle is located in the upper part of the interior component, which is advantageous because a sitting person can grab the handle more easily if it is at about the level of his upper body.

In a preferred embodiment, the interior component is an interior door trim. The grab handle is consequently an integral part of an interior door trim. The interior door trim is usually attached to metal components of the body frame of a vehicle or to a metal inner sheet which is again fixed to the body frame. The interior door trim is usually attached to the metal parts of the vehicle by plug connection or screw connection. The interior door trim can feature actuating elements, e.g. for actuating the windows and mirrors, opening the doors, electrical switches and the like.

The interior component with the integral grab handle is suitable to be arranged at any door of a vehicle. It is advantageous if it is arranged at least the driver's door, because a driver is a person who is necessarily present in a vehicle for operating it, and will open and close the driver's door regularly. It is also advantageous if it is arranged at the passenger's door, as this door is also used regularly. Moreover, many vehicles have only front doors. With other words, the interior component is preferably an interior door trim and may as such, in particular, be a front door trim of a vehicle.

If the interior component is mounted into a vehicle, the first side of the surface of the interior component is preferably facing the occupant cell. Consequently, a second side of the surface of the interior component is facing the frame of the vehicle door.

It is advantageous if the grab handle is integrated flush with the adjoining sections of the first side of the interior component. This means that the grab handle is preferably within one level with the adjoining sections of first side of the surface of the interior component, so it does not extend into interior space of the vehicle. Being flush with the adjoining parts of the first side, the grab handle can be seen as a continuation of the surface structure, where at the position of the grab handle the surface structure is hollowed out, so that there is a hollow space a person can grab in and apply force to open or close the door. The advantage of the grab handle being flush with the adjoining sections of the first side of the interior component is mechanical stability, so that strains in the material upon pulling at the grab handle are reduced to a minimum. Furthermore, the flush appearance contributes to a visual impression of quality and also to a quality feeling of a smooth surface of the grab handle along with the interior component. It is however also possible that the grab handle is bridging an indentation in the first side of the interior component without being flush with the adjoining sections of the first side of the interior component.

The inventive interior component can comprise any suitable material. It is however preferred if the material of the interior component comprises a polymer, and even more preferred a thermoplastic polymer. Thermoplastic material is advantageous because it is very suitable for molding procedures, such as injection molding. A further advantage of thermoplastic material is that it can be welded. Typical thermoplastic polymers suitable for the interior component are polyvinyl, polyvinyl chloride, polyethylene and polypropylene, without being limited to these compounds. As the grab handle is an integral part of the interior component, it is of the same material as the interior component.

In a further embodiment of the invention, the grab handle has a structured surface. Structured means that the surface has a structure, which is different from being smooth. A surface can have a structure by showing features such as knobs, nubs, indentions, dimples, little elevations, grooves. A structured surface of the grab handle is advantageous because it supports a solid grip of a person's hand and prevents slipping of the hand from the grab handle upon pulling at it. Furthermore, a structured surface has an attractive visual appearance, which contributes to an impression of quality of the interior of the vehicle.

The grab handle can be filled with a material, e.g. with the same material the interior component is made of. The grab handle can also have a hollow structure, which means that it is tube-like or semi tube-like. If the grab handle has a hollow structure, it is preferred that there are inner structures, i.e. inside the grab handle, for means of stabilization.

A second aspect of the invention is referring to a vehicle which has an inventive interior component. Consequently, preferred is a vehicle with an interior component for a door of a vehicle with a surface, comprising a grab handle at a first side of the interior component, wherein the grab handle is formed as an integral part of the interior component. Advantages of such a vehicle coincide with the advantages mentioned with respect to the inventive interior component for a door of a vehicle.

A third aspect of the invention is referring to a method of manufacturing an interior component for a vehicle door comprising a grab handle as an integral part of the interior component. In the method, the interior component is formed by injection molding thereby forming at least one opening in the interior component and a grab handle bridging the opening.

In the injection molding tool the interior component is molded. The geometrical shape of the cavity of the molding tool is defining the outer shape of the interior component. The core is designated for forming the inner side of the grab handle. The at least one slider is provided for forming inner structures of the grab handle. Any number of sliders can be used in the molding process however it is preferred to use two sliders in the molding process. The cavity of the molding tool as well as the core preferably bears structures in the position where the grab handle is formed. Upon molding, these structures are adopted by the surface of the grab handle.

In order to close at least the opening, a further step of joining a cover to the interior component is added after the interior component has been removed from the molding tool. It is advantageous to apply one single cover in order to cover both the opening and a cavity in the rear side of the grab handle, because then only one joining step needs to be performed, saving time and costs. It is preferred if the joining is carried out by fitting a piece of material having an appropriate form onto the opening, and then applying heat in order to facilitate welding of the material. The material for closing the open part is preferably the same material as that of the interior component. The joining can also be done by adhesive bonding or any other suitable technique known in the art.

The invention is described in conjunction with the accompanying figures.
- Figure 1: shows a view onto a first side an interior component according to an embodiment of the invention.
- Figure 2: shows a view onto a second side of an interior component according to an embodiment of the invention after molding.
- Figure 3: shows the interior component of figure 2 after a joining a cover.

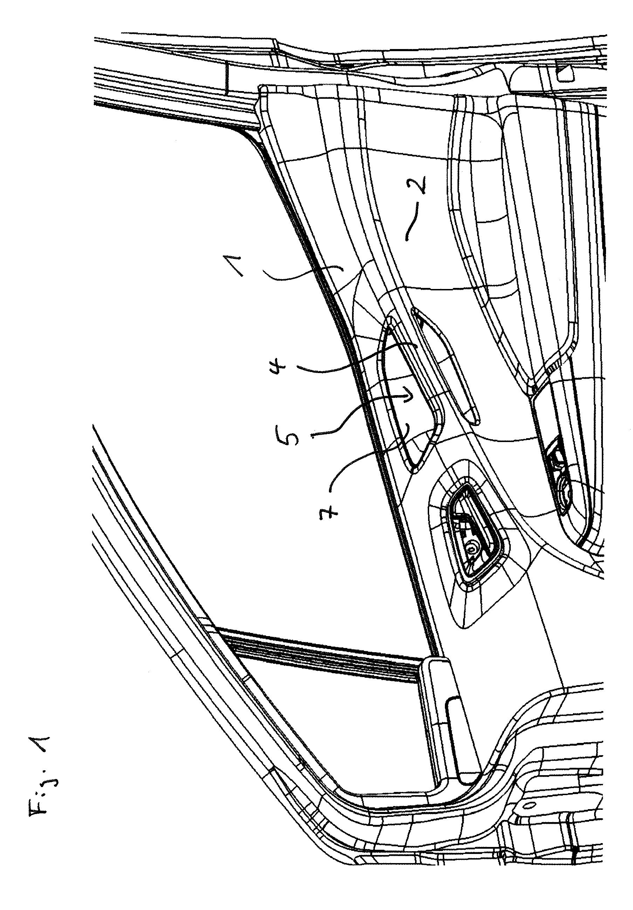

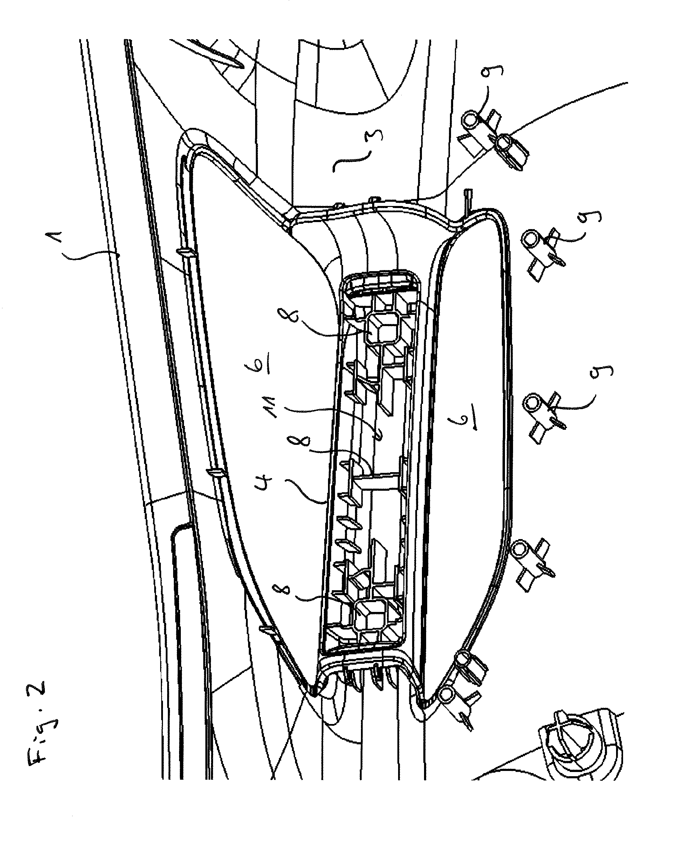

In the embodiment as shown in figure 1 the interior component is an interior door trim 1 for a door of a vehicle with a first side 2 facing toward the occupant cell (see figure 1) and a second side 3 facing the bodywork of the vehicle (see figure 2). The interior door trim 1 comprises a grab handle 4 located at the first side 2 of the door trim 1 for opening and closing the door, wherein the grab handle 4 is an integral part of the door trim 1. In the present embodiment, the grab handle 4 is arranged flush with the first side 2 of the door trim 1, i.e. the surface of the grab handle 4 that shows towards the occupant cell is flush with the surface of the adjoining parts of the door trim 1. Thereby the grab handle is bridging an indentation 5 in the first side 2 of the door trim 1. Although the grab handle 4 is flush with the first side 2 of the door trim 1 in the present embodiment, it may as well bridge the indentation 5 in an arcuate manner so that it projects over the adjoining sections of the first side towards the interior of the occupants cell.

In the present embodiment, the grab handle 4 has a more or less semi tube-like structure with a cavity 11 that is open towards the bodywork of the vehicle. Inside the cavity 11, a number of inner structures 8 stabilize the grab handle 4.

Manufacturing the door trim 1 of the first embodiment is done by means of injection molding. In the injection molding process, a molding tool with a mold, a core and at least one slider is provided. The mold has a molding surface which resembles the inverse shape of the first side 2 of the door trim 1 whereas the core has a core surface which resembles the inverse shape of the second side 3 of the door trim 1.

In the present embodiment, two openings 6 are formed in the door trim 1 by sections of the core surface which contact corresponding sections of the mold surface. Having two opening allows for grasping the whole circumference of the grab handle 4.

The at least one slider of the molding tool is located where the inner structures 8 of the cavity 11 of the grab handle 4 are to be formed, and a surface portion of the at least one slider resembles the inverse shape of these inner structures 8.

During manufacturing of the door trim 1, a molten polymer resin is injected into the molding tool. After solidification of the molten polymer resin the molding tool is opened and the door trim 1 is ejected from the molding tool.

The openings 6 in the door trim 1 are closed by joining a cover 7 to the openings 6. In the present embodiment, the cover 7 has an annular shape which allows covering the openings 6 and, at the same time, also the cavity 11 in the grab handle 4, as can best be seen in figure 1. However, it is also a possibility to close the openings 6 by a different cover than the cavity 11, i.e. to use two separate covers.

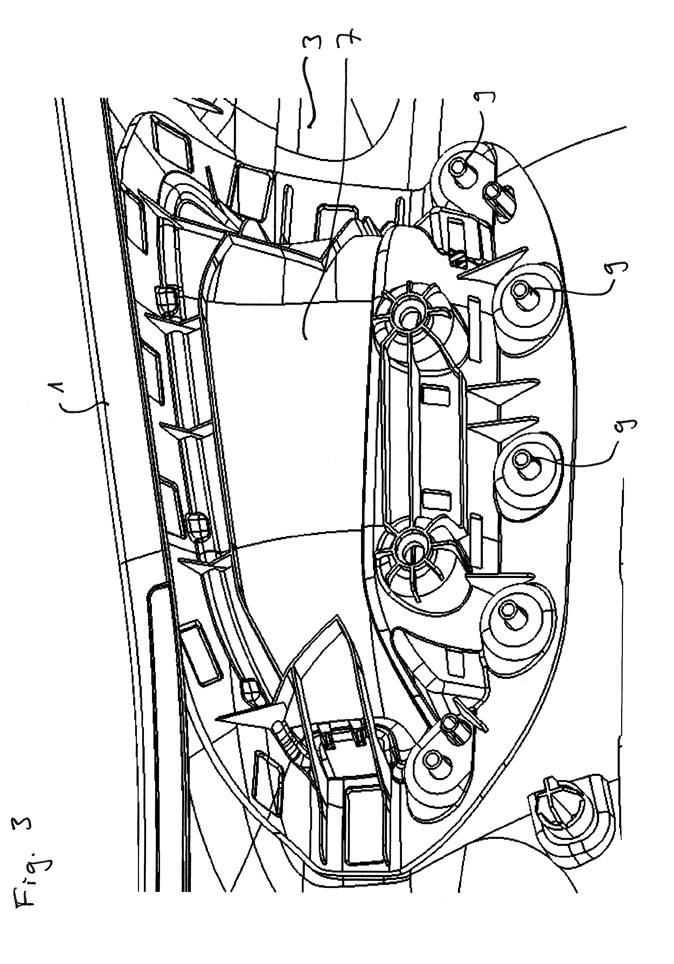

The cover 7 will be attached from the rear-side of the door trim 1 and is held in place by the appliances 9 (see figures 2 and 3) before joining the cover 7 to the material of the door trim 1. In the present embodiment, the cover 7 is made of the same polymer material as the door trim 1 and is joined to the material of the door trim 1 by welding.

### Reference numerals

- 1 =: interior door trim
- 2 =: first side of the door trim
- 3 =: second side of the door trim
- 4 =: grab handle
- 5 =: indentation
- 6 =: opening
- 7 =: cover
- 8 =: inner structures inside the grab handle
- 9 =: appliances for attachment of the cover
- 11: cavity

## Claims

1. Interior component for a door of a vehicle with a surface, comprising a grab handle (4) located at first side (2) of the interior component (1), wherein the grab handle (4) is formed as an integral part of the interior component (1).

2. Interior component according to claim 1, wherein the interior component is an interior door trim (1) of a vehicle.

3. Interior component according to claim 2, wherein the interior door trim (1) is an interior front door trim of a vehicle.

4. Interior component according to any of the foregoing claims, wherein the first side (2) of the surface is facing the occupant cell if the interior component is mounted into a vehicle.

5. Interior component according to any of the foregoing claims, therein the grab handle (4) is integrated flush with the adjoining sections of the first side (2) of the interior component.

6. Interior component according to any of the foregoing claims, wherein the interior component (1) is formed by thermoplastic material.

7. Interior component according to any of the foregoing claims, wherein the grab handle (4) has a structured surface.

8. Interior component according to any of the foregoing claims, wherein the interior component (1) is formed by an injection molding method.

9. Vehicle with an interior component according to claims 1 to 8.

10. Method of manufacturing an interior component for a vehicle door comprising a grab handle as an integral part of the interior component, where the interior component (1) is formed by injection molding thereby forming at least one opening (6) in the interior component (1) and a grab handle (4) bridging the opening (6).

11. Method according to claim 9, further comprising the step of joining a cover (7) to the interior component(1) to cover at least the opening (6).

12. Method according to claim 10, wherein the step of joining is carried out by welding.
